# EUROPEAN PATENT APPLICATION

(11) **EP 1 318 338 A2**
(43) Date of publication of application: **11.06.2003**
(21) Application number: 02027268.8
(22) Date of filing: 06.12.2002
(51) Int. Cl.: F16K 17/00

(54) **Pneumatic valve**

(30) Priority: 07.12.2001 IT BO20010743
(71) Applicant: FINI ELETTROCOSTRUZIONI MECCANICHE S.p.A., 40069 Zola Predosa (IT)
(72) Inventor: Menegatti, Stefano, 44025 Massafiscaglia (IT); Pellicano, Pasquale Patrizio, 40026 Imola (IT)
(74) Representative: Jorio, Paolo

(57) **Abstract**

A pneumatic valve is connected to a source of pressurized gas, and has an inlet (7) and an outlet (9) which communicate pneumatically with a cavity (5) in which a slide valve (10) is movable to and from a position opening the valve; the slide valve (10) at least partly defining a chamber (13) isolated pneumatically from the outlet (9) and connectable pneumatically to the inlet (7) when the pressure of the gas at the inlet (7) substantially equals a maximum pressure.

## Description

The present invention relates to a pneumatic valve.

The present invention may be used to advantage, for example, in a compressor.

Compressors are known to feature a pneumatic valve of the type comprising a cavity having a given longitudinal axis and in turn comprising a wide portion and a narrow portion; an inlet communicating pneumatically with said narrow portion and connectable to a tank of pressurized gas; an outlet extending crosswise to said axis and communicating pneumatically with said wide portion; and a slide valve which engages the wide portion in sliding manner, and is movable between an open position, in which the inlet and outlet communicate pneumatically, and a closed position, in which the inlet and outlet are isolated pneumatically.

The slide valve normally comprises a bell substantially coaxial with said axis and fitted in axially-sliding manner to said wide portion; and a pin, the stem of which engages the bell in sliding manner, and the head of which extends outside the bell, and is normally maintained in said closed position closing the valve by the thrust exerted by a first spring interposed between the cavity and the bell, and by the thrust exerted by a second spring housed in a chamber defined between said stem and the bell.

The stem has a pneumatic conduit, a first portion of which extends crosswise to said axis to communicate with the wide portion, and a second portion of which extends coaxially with said axis to communicate with said chamber. When the slide valve is in the closed position closing the valve, greater force is exerted on the pin by the second spring than in the opposite direction by the gas at the inlet.

When the gas pressure at the valve inlet is substantially minimum, the slide valve moves into the open position in opposition to the thrust exerted by the first spring, and gas is supplied to both the outlet and said chamber, so that two equal, opposite forces are exerted on the pin. Since the outlet extends crosswise to the valve axis, the force exerted on the pin by the second spring is balanced by an equal, opposite force exerted on the pin by the variation in the amount of movement of the gas supplied from the inlet to the outlet of the valve, so that, when the valve is in the open position, the pin moves along the wide portion of the cavity, integrally with the bell.

When the gas pressure at the valve inlet is substantially maximum, the inlet is connected to the outside, the gas tends to flow from the outlet to the inlet, and the resulting variation in the amount of movement of the gas exerts on the pin a force which cooperates with the force exerted on the pin by the second spring, so that the pin moves into the closed position closing the valve.

With the bell still in the open position, the valve is therefore closed substantially instantaneously, so that the pressure of the gas at the outlet is maintained substantially equal to said maximum pressure. Subsequently, as the gas is consumed, the gas pressure at the outlet falls, and, on reaching the minimum pressure, the first spring moves the bell into the closed position.

Pneumatic valves of the above type have serious drawbacks, both technical and economic, on account of the complex, bulky structure of the slide valve.

It is an object of the present invention to provide a pneumatic valve designed to eliminate the aforementioned drawbacks.

According to the present invention, there is provided a pneumatic valve connectable to a source of pressurized gas, and comprising a cavity having a given longitudinal axis; an inlet and an outlet axially offset with respect to each other along said axis and communicating pneumatically with said cavity; a slide valve engaging said cavity in sliding manner to move between an open position, in which said inlet and said outlet communicate pneumatically, and a closed position, in which the inlet and the outlet are isolated pneumatically; and actuating means for moving said slide valve from said open position to said closed position; characterized in that said actuating means comprise a chamber defined at least partly by said slide valve and isolated pneumatically from said outlet; a pneumatic circuit for pneumatically connecting said inlet and said chamber; and valve means located along said circuit to connect the inlet and the chamber when the pressure of said gas substantially equals a maximum pressure.

A non-limiting embodiment of the present invention will be described by way of example with reference to the accompanying drawings, in which:

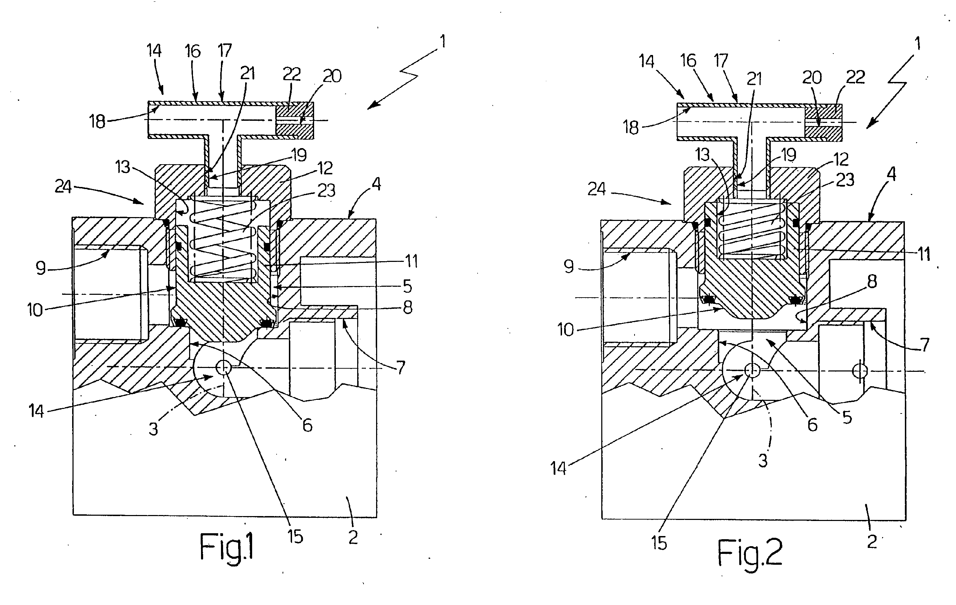

Figures 1 and 2 show schematic, partly sectioned side views of a preferred embodiment of the pneumatic valve according to the present invention in two different operating positions.

Number 1 in Figures 1 and 2 indicates as a whole a pneumatic valve employed, for example, in a compressor (not shown) and comprising a substantially rectangularsection, substantially parallelepiped-shaped casing 2, which has a vertical longitudinal axis 3, is defined at the top by a substantially flat surface 4 perpendicular to axis 3, and has a longitudinal cavity 5 substantially coaxial with axis 3, with its concavity facing upwards, and opening outwards at surface 4.

Cavity 5 comprises a narrow bottom portion 6, which communicates pneumatically with an inlet hole 7 formed through casing 2, crosswise to axis 3, and connectable to a feed tank (not shown) of pressurized gas (in the example shown, air); and a wide top portion 8, which communicates pneumatically with an outlet hole 9 formed through casing 2, crosswise to axis 3, and connectable, for example, to a storage tank (not shown) in turn connected to a known compressed-air gun not shown.

Valve 1 also comprises a slide valve 10, which is substantially coaxial with axis 3, engages portion 8 in sliding manner, and comprises a bell 11 with its concavity facing upwards.

Cavity 5 is closed at the top by a substantially cup-shaped closing member 12, which is screwed, with its concavity facing downwards, to a threaded end of portion 8 to define, together with slide valve 10, a variablevolume chamber 13 connectable pneumatically to hole 7 by a pneumatic circuit 14. Circuit 14 comprises a first portion 15 formed through casing 2 and having a known solenoid valve (not shown) movable between an open position and a closed position respectively opening and closing circuit 14; and a second portion 16 extending substantially outside casing 2.

Portion 16 comprises a delivery pipe (not shown) connected to portion 15; and a substantially T-shaped fitting 17 having an inlet 18 connected to the delivery pipe (not shown), and two outlets 19, 20. Outlet 19 engages a hole 21 formed through member 12 to connect portion 16 pneumatically to chamber 13; and outlet 20 opens outwards, is defined by a choke device 22 inserted inside fitting 17, and has a smaller cross section area than outlet 19.

Slide valve 10 is normally maintained in a closed position closing valve 1 (Figure 1) - in which slide valve 10 cooperates with a top end of portion 6 to isolate holes 7 and 9 pneumatically - by a spring 23, which is housed, coaxially with axis 3, inside chamber 13, is interposed between member 12 and slide valve 10, and defines, together with chamber 13, pneumatic circuit 14, and said solenoid valve (not shown), an actuating device 24 for moving and maintaining slide valve 10 into and in the closed position.

In connection with the above, it should be pointed out that:
when slide valve 10 is in the closed position, chamber 13 is isolated pneumatically from hole 9; and
when both slide valve 10 and said solenoid valve (not shown) are in the open positions opening valve 1 and circuit 14 respectively, chamber 13 is isolated pneumatically from hole 9, by virtue of the solenoid valve (not shown), as it is opened, substantially instantaneously closing slide valve 10, and so preventing compressed air supply from hole 9 to chamber 13.

Operation of valve 1 will now be described with reference to the accompanying drawings, and as of the instant in which both slide valve 10 and said solenoid valve (not shown) are in the closed positions.

Spring 23 is so calibrated that, when the pressure of the compressed air supplied from the feed tank (not shown) to hole 7 substantially equals a minimum pressure, slide valve 10 is moved, in opposition to spring 23, from the closed position (Figure 1) to an open position (Figure 2), in which holes 7 and 9 communicate pneumatically, and compressed air is fed to said gun (not shown).

Conversely, when the pressure of the compressed air supplied to hole 7 substantially equals a maximum pressure, the solenoid valve (not shown) moves into the open position, and compressed air is supplied from hole 7 along circuit 14 to inlet 18 of fitting 17, where choke device 22 substantially prevents compressed air supply through outlet 20, but allows compressed air supply to outlet 19 and, therefore, to chamber 13.

The sum of the forces exerted on slide valve 10 by the compressed air in chamber 13 and by spring 23 is therefore greater than the opposite force exerted on slide valve 10 by the compressed air in hole 7, so that slide valve 10 moves into the closed position; hole 9 is isolated substantially instantaneously from hole 7 and, therefore, from outlet 20; and the compressed air in circuit 14 is exhausted through outlet 20.

Since slide valve 10 is formed in one piece and moved from the open to the closed position by the compressed air itself, valve 1 is relatively straightforward, cheap to produce, easy to assemble and disassemble, and relatively compact.

## Claims

1. A pneumatic valve connectable to a source of pressurized gas, and comprising a cavity (5) having a given longitudinal axis (3); an inlet (7) and an outlet (9) axially offset with respect to each other along said axis (3) and communicating pneumatically with said cavity (5); a slide valve (10) engaging said cavity (5) in sliding manner to move between an open position, in which said inlet (7) and said outlet (9) communicate pneumatically, and a closed position, in which the inlet (7) and the outlet (9) are isolated pneumatically; and actuating means (24) for moving said slide valve (10) from said open position to said closed position; **characterized in that** said actuating means (24) comprise a chamber (13) defined at least partly by said slide valve (10) and isolated pneumatically from said outlet (9); a pneumatic circuit (14) for pneumatically connecting said inlet (7) and said chamber (13); and valve means located along said circuit (14) to connect the inlet (7) and the chamber (13) when the pressure of said gas substantially equals a maximum pressure.

2. A pneumatic valve as claimed in Claim 1, wherein said slide valve (10) is formed in one piece.

3. A pneumatic valve as claimed in Claim 1 or 2, wherein said circuit (14) comprises a first outlet (19) connected pneumatically to said chamber (13); and a second outlet (20) connected pneumatically to the outside.

4. A pneumatic valve as claimed in Claim 3, wherein said first and said second outlet (19, 20) have a first and, respectively, a second cross section having a first and, respectively, a second given area; said first area being greater than said second area.

5. A pneumatic valve as claimed in any one of the foregoing Claims, wherein said actuating means (24) also comprise thrust means (23) for normally maintaining said slide valve (10) in said closed position; said gas moving the slide valve (10) into said open position in opposition to said thrust means (23) when the pressure of the gas is at least equal to a minimum pressure.

6. A pneumatic valve as claimed in Claim 5, wherein said thrust means (23) are elastic thrust means housed in said chamber (13).

7. A compressor comprising a pneumatic valve as claimed in any one of Claims 1 to 6.
